# EUROPEAN PATENT APPLICATION

(11) **EP 3 118 500 A1**
(43) Date of publication of application: **18.01.2017**
(21) Application number: 14885166.0
(22) Date of filing: 07.11.2014
(51) Int. Cl.: F16K 31/06, F16K 47/04

(54) **ELECTROMAGNETIC CONTROL VALVE**

(30) Priority: 13.03.2014 JP 2014050307
(71) Applicant: Kabushiki Kaisha Saginomiya Seisakusho, Tokyo 165-0033 (JP)
(72) Inventor: OKAWARA, Ichiro, Sayama-shi Saitama 350-1395 (JP)
(74) Representative: Petraz, Gilberto Luigi
(86) International application number: PCT/JP2014/079641
(87) International publication number: WO 2015/136773

(57) **Abstract**

Provided is a pressure balance type electromagnetic control valve in which an electromagnetic force of an electromagnetically-driving part (5) is balanced against a spring force of an adjusting spring (83), and an influence of a pressure difference applied to a valve body (31) between the pressure of a first port (11) and a pressure of a second port (21) is cancelled so that an opening degree of the valve body (31) is proportionally changed. An opening degree is accurately controlled by shortening a length of a valve housing (1) and removing an influence of the dynamic pressure of a fluid of the second port with respect to a plunger of the electromagnetically-driving part. The electromagnetically-driving part (5), an adjusting spring (83) (setting adjustment part (8)), a pressure equalizing chamber (13), and a diaphragm (4) (pressure sensing part) are provided on the opposite side of the valve port (22) with respect to the valve body (31) on an axis line (L) of a valve port (22). A cover (6) into which a connection rod (323) is inserted is provided between the pressure equalizing chamber (13) and a plunger (53). The flow of the fluid from the pressure equalizing chamber (13) toward the plunger (53) is throttled (regulated) by a gap between an insertion hole (6a) of the cover (6) and the connection rod (323).

## Description

### Technical Field

The present invention relates to an electromagnetic control valve, and relates to a pressure balance type electromagnetic control valve in which an electromagnetic force generated by feeding current to an electromagnetically-driving part is balanced against a spring force of an adjusting spring which counteracts the electromagnetic force, and an influence of a pressure difference applied to a valve body between pressure of a first port and pressure of a second port is cancelled so that an opening degree of the valve body is proportionally changed.

### Background Art

A conventional electromagnetic control valve of this type is disclosed in JP 2011-169415 A (Patent Literature 1), for example. Fig. 5 is a diagram schematically illustrating the electromagnetic control valve in Patent Literature 1. A valve bar 20 having a valve body 20a is disposed in a valve housing 10, the valve bar 20 is displaced in a direction of an axis line L by an electromagnetic force generated by feeding current to a magnet coil 30a of an electromagnetically-driving part 30, and an opening degree of a valve port 40 is adjusted by the valve body 20a in the conventional electromagnetic control valve.

In addition, the electromagnetic force of the electromagnetically-driving part 30 is balanced against a spring force of an adjusting spring 50. Further, a force generated due to a pressure difference between a pressure equalizing chamber 60 communicating with a primary port 10a and a secondary port 10b is transmitted to the valve body 20a through a diaphragm 70 (pressure sensing part). Further, a force from the diaphragm 70 cancels the force acting on the valve body 20a due to the pressure difference between the primary port 10a and the secondary port 10b. Accordingly, the influence of the force acting on the valve body 20a due to the pressure difference is removed, and the opening degree of the valve port 40 is proportionally changed with a small amount of fed current.

### Citation List

### Patent Literature

Patent Literature 1: JP 2011-169415 A

### Summary of Invention

### Technical Problem

A pressure equalizing path 80 through which the pressure equalizing chamber communicates with the primary port 10a is formed in a main housing (not illustrated) disposed on an outer circumference of the electromagnetic control valve in the conventional electromagnetic control valve. Thus, there is a problem that the design of the main housing is complex. In addition, the diaphragm 70 serving as the pressure sensing part and a pressure introducing part 90 which introduces a fluid pressure from the pressure equalizing chamber 60 to the diaphragm 70 are disposed on the opposite side of the electromagnetically-driving part 30 with respect to the valve body 20a. For this reason, a length of the valve housing 10 in the direction of the axis line L increases, and thus, it is difficult to reduce a size of the electromagnetic control valve.

Further, a structure is formed in which the valve port 40 is orthogonal to the secondary port 10b since the diaphragm 70 (pressure sensing part) is disposed below the secondary port 10b (a lower portion of the valve housing 10), and accordingly, there is a problem that a pressure loss may occur in the orthogonal portion between the valve port 40 and the secondary port 10b, and the flow of a flow rate is inhibited.

An object of the present invention is to reduce a size of a pressure balance type electromagnetic control valve by shortening a length of a valve housing in the pressure balance type electromagnetic control valve in which an electromagnetic force of an electromagnetically-driving part is balanced against a spring force of an adjusting spring, an influence of a pressure difference applied to a valve body between a first port and a second port is cancelled so that an opening degree of the valve body is proportionally changed. In addition, another object is to reduce a pressure loss in the second port. Further, another object is to accurately control the valve opening degree by removing an influence of the dynamic pressure of the fluid of the second port against a plunger of the electromagnetically-driving part.

### Solution to Problem

An electromagnetic control according to claim 1 includes: a valve chamber and a valve port formed between a first port and a second port; and an electromagnetically-driving part that drives a valve body in the valve chamber to open and close the valve port, wherein a force acting on the valve body due to a pressure difference between the first port and the second port is offset by a force acting on the valve body due to a pressure difference applied to a pressure sensing part between the valve chamber and a pressure equalizing chamber, an electromagnetic force of the electromagnetically-driving part is balanced against a spring force of an adjusting spring so that an opening degree of the valve port is proportionally changed, the electromagnetically-driving part includes a plunger which is movable inside a case in an axis direction of the case by the electromagnetic force, a valve member having the valve body is connected to the plunger through a connecting part of the valve member, the electromagnetically-driving part, the adjusting spring, the pressure equalizing chamber, and the pressure sensing part are disposed on an opposite side of the valve port with respect to the valve body on an axis line of the valve port, a pressure equalizing path through which the valve port communicates with the pressure equalizing chamber is formed in the valve member having the valve body, and a cover, which regulates flow of a fluid from the pressure equalizing chamber toward the plunger and to which a portion of the connecting part is insertable, is disposed between the pressure equalizing chamber and the plunger.

The electromagnetic control valve according to claim 2 is the electromagnetic control valve according to claim 1, wherein the cover includes an insertion hole into which a connection rod of the connecting part is inserted, and the flow of the fluid toward the plunger is regulated by throttling the flow of the fluid using a gap between the insertion hole and the connection rod.

The electromagnetic control valve according to claim 3 is the electromagnetic control valve according to claim 1 further including: an insertion hole through which a connection rod of the connecting part is inserted into the cover; and a sealing member which is fitted into the connection rod inside the insertion hole with a clearance, wherein the flow of the fluid toward the plunger is regulated by the sealing member.

The electromagnetic control valve according to claim 4 is the electromagnetic control valve in any one of claims 1 to 3, wherein the pressure sensing part is a flexible diaphragm which is disposed between the valve chamber and the pressure equalizing chamber and is connected to the valve member.

### Advantageous Effects of Invention

According to the electromagnetic control valve according to claim 1, the electromagnetically-driving part, the adjusting spring, the pressure equalizing chamber, and the pressure sensing part are on the opposite side of the valve port with respect to the valve body on the axis line of the valve port, and the pressure equalizing path through which the valve port communicates with the pressure equalizing chamber is disposed in the valve body, and thus, a structure is formed in which only the second port is disposed below the valve port so that a length of the valve housing is shortened in an axis-line direction. Therefore, it is possible to reduce a size of the electromagnetic control valve. In addition, it is possible to make the second port communicate coaxially with respect to the valve port, and thus, it is possible to reduce a pressure loss in the second port. Further, it is possible to regulate the flow of the fluid of the valve port toward the plunger through the pressure equalizing chamber using the cover provided between the pressure equalizing chamber and the plunger of the electromagnetically-driving part. Therefore, a dynamic pressure (flow pressure) of the fluid does not act on the plunger of the electromagnetically-driving part and the like, and thus, it is possible to accurately control the valve opening degree.

According to the electromagnetic control valve according to claim 2, the gap is present between the insertion hole and the connection rod of the cover, and thus, the cover does not influence on the operation of the valve member, in addition to the effect of claim 1.

According to the electromagnetic control valve according to claim 3, the flow of the fluid is further regulated by the clearance between the sealing member of the cover and the connection rod, and thus, it is possible to further reduce the influence of the fluid toward the electromagnetically-driving part, in addition to the effect of claim 1.

According to the electromagnetic control valve according to claim 4, the pressure sensing part is a diaphragm disposed between the valve chamber and the pressure equalizing chamber, and thus, it is possible to secure the airtightness between the valve chamber and the pressure equalizing chamber, in addition to the effects of claims 1 to 3.

### Brief Description of Drawings

Fig. 1 is a longitudinal sectional view of an electromagnetic control valve of a first embodiment of the present invention.
Figs. 2A and 2B are a plan view and a longitudinal sectional view of a plunger of the electromagnetic control valve of the first embodiment.
Fig. 3 is a diagram illustrating an exemplary system to which an electromagnetic control valve of an embodiment is applied.
Fig. 4 is a longitudinal sectional view of an electromagnetic control valve of a second embodiment of the present invention.

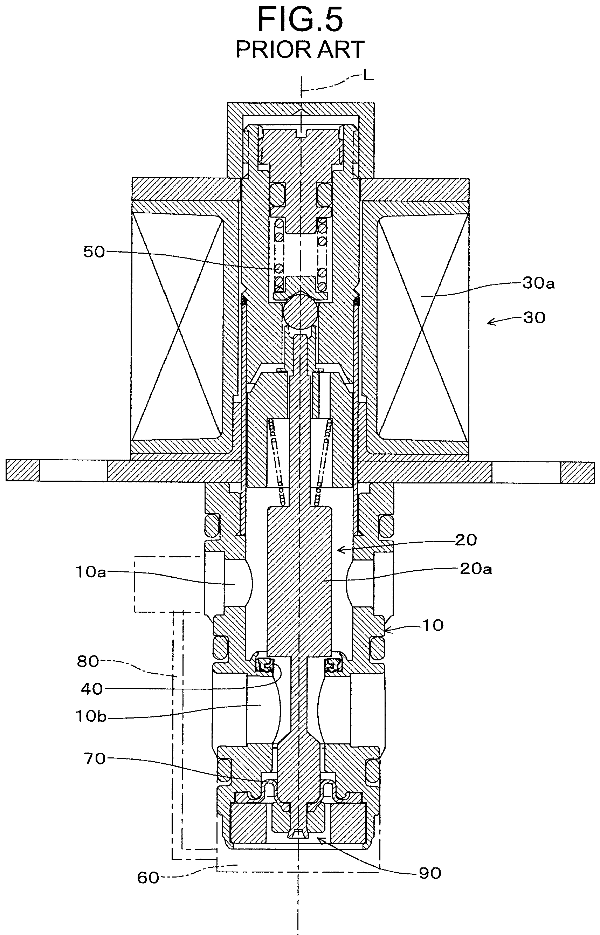

Fig. 5 is a diagram schematically illustrating a conventional electromagnetic control valve.

### Description of Embodiments

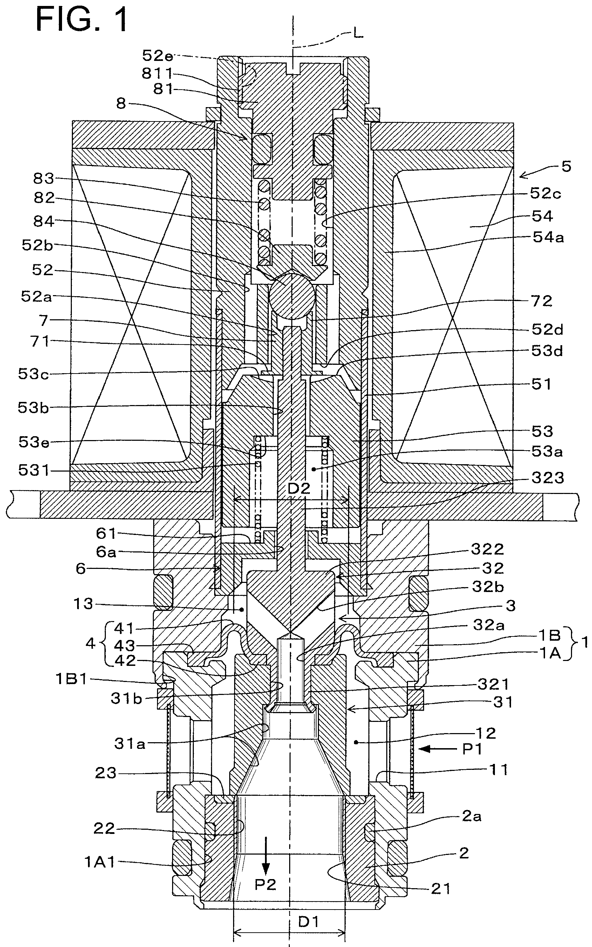

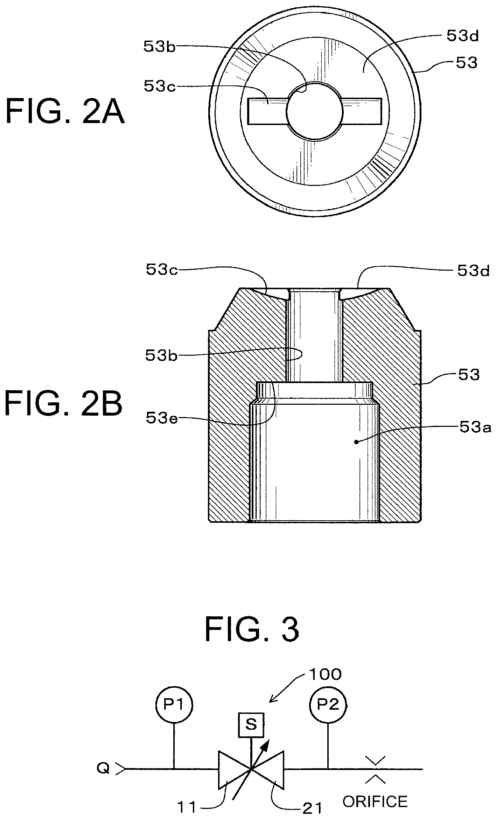

Next, embodiments of the present invention will be described. Fig. 1 is a longitudinal sectional view of an electromagnetic control valve of a first embodiment of the present invention in a closed state, and Figs. 2A and 2B are a plan view and a longitudinal sectional view of a plunger of the electromagnetic control valve of the first embodiment. The electromagnetic control valve of the embodiment includes a valve housing 1 which is formed of a lower main body 1A and an upper main body 1B. The lower main body 1A is fitted into a fitting hole 1B1 in a lower portion of the upper main body 1B, and the lower main body 1A is fixedly attached to the upper main body 1B in an integrated manner by caulking an opening end

### portion of the fitting hole 1B1.

A first port 11, which is disposed on a high pressure side and through which a fluid flows as indicated by the arrow, and a valve chamber 12, which communicates with the first port 11, are formed in the lower main body 1A. In addition, a valve seat fitting hole 1A1 is formed in a lower portion of the valve chamber 12 in the lower main body 1A, and a valve seat member 2 is fitted into the valve seat fitting hole 1A1. Further, the lower main body 1A is fixedly attached to the valve seat member 2 in an integrated manner by caulking an opening end portion of the valve seat fitting hole 1A1. Incidentally, a space between the valve seat member 2 and the valve seat fitting hole 1A1 is sealed using an O-ring 2a. In addition, a pressure equalizing chamber 13 is formed in the upper main body 1B, and a plunger case 51, which is a case of an electromagnetically-driving part 5 to be described below, is fitted into and fixedly attached to an upper portion of the pressure equalizing chamber 13.

A second port 21, which is disposed on a low pressure side and through which the fluid flows as indicated by the arrow, and a valve port 22, through which the second port 21 communicates with the valve chamber 12, are formed in the valve seat member 2. The valve port 22 has a circular horizontal cross-section shape having an axis line L as the center thereof, and a ring-shaped valve seat sheet 23 is disposed around an opening thereof on the valve chamber 12 side.

A valve member 3, which is displaceable in a direction along the axis line L, extends in the valve chamber 12 and the pressure equalizing chamber 13. The valve member 3 includes a cylindrical valve body 31 which is positioned in the valve chamber 12 and can be in contact with and separated from the valve seat sheet 23 of the valve seat member 2, and a connecting part 32 which extends above the valve body 31. The connecting part 32 includes a coupling shaft 321 which is coupled with the valve body 31 at a lower end of the connecting part, a boss part 322 which has a larger diameter than the coupling shaft 321 and is positioned in the pressure equalizing chamber 13, and a connection rod 323 which extends above the boss part 322.

A diaphragm 4 made of rubber is disposed between the valve body 31 and the boss part 322. The diaphragm 4 includes a convolution part 41, an inner ring part 42 on an inner side of the convolution part, and an outer ring part 43 on an outer side of the convolution part 41. In addition, the valve body 31 includes an opening hole 31a in which a cylindrical shape is connected with a cone shape, at a center thereof, and a connection hole 31b which is connected to the opening hole 31a. Further, the coupling shaft 321 of the connecting part 32 passes through the opening of the inner ring part 42 in the diaphragm 4 and is fitted into the connection hole 31b of the valve body 31. The valve body 31 and the boss part 322 compress the inner ring part 42, and by caulking the lower end portion of the coupling shaft 321, the valve body 31, the diaphragm 4, and the connecting part 32 are fixed in an integrated manner. In addition, the outer ring part 43 of the diaphragm 4 is interposed to be pressed between the upper end of the lower main body 1A and the lower opening end portion of the pressure equalizing chamber 13 of the upper main body 1B. Incidentally, an upper end of the valve body 31 (near the lower side of the valve member 3) is normally held on the axis line L by an automatic centripetal effect due to a restoring force of the diaphragm 4 generated when the pressure is applied.

A first pressure equalizing path 32a, which extends in a direction of the axis line L from the opening hole 31a side of the valve body 31, and the second pressure equalizing path 32b, which is opened from an upper end of the first pressure equalizing path 32a obliquely to the pressure equalizing chamber 13, are formed in the boss part 322 of the connecting part 32. The first pressure equalizing path 32a, the second pressure equalizing path 32b, and the opening hole 31a of the valve body 31 form a "pressure equalizing path", and the valve port 22 communicates with the pressure equalizing chamber 13 through the opening hole 31a, the first pressure equalizing path 32a, and the second pressure equalizing path 32b.

The diaphragm 4 has flexibility, and forms a "pressure sensing part" which transmits a force, which is generated by a difference between a pressure (P1) of the first port 11 applied to a side of the diaphragm 4 facing the valve chamber 12 and a pressure (P2) of the second port 21 applied to a side of the diaphragm 4 facing the pressure equalizing chamber 13, to the valve member 3 (valve body 31). In addition, the diaphragm 4 hermetically comparts the pressure equalizing chamber 13 and the valve chamber 12.

The electromagnetically-driving part 5 is disposed above the valve housing 1. The electromagnetically-driving part 5 includes the cylindrical plunger case 51, an attractor 52 which is fixed on an upper end of the plunger case 51 and made of a magnetic body, a plunger 53 which is disposed in the plunger case 51 and made of a magnetic body, and a magnet coil 54 which is disposed ay an outer circumference of the plunger case 51 and in which a winding is wound around a bobbin 54a. Incidentally, the plunger case 51 is fixed to the attractor 52 by welding or the like. An insertion hole 52a coaxial with the axis line L is formed in the attractor 52, and attractor pressure equalizing paths 52b are formed on both sides of the insertion hole 52a in a direction perpendicular to the axis line L. Further, an adjustment part hole 52c having a larger diameter than the insertion hole 52a is formed on a side of the attractor 52 opposite to the insertion hole 52a.

Not only a cylindrical plunger spring chamber 53a and a first plunger pressure equalizing path 53b, which are coaxial with the axis line L, but also a second plunger pressure equalizing path 53c, which is obtained by notching an end of the first plunger pressure equalizing path 53b on the attractor 52 side in an arc shape in a diametrical direction, is formed in the plunger 53 as illustrated in Figs. 2A and 2B. Incidentally, each of the attractor 52 and the plunger 53 has a shape which is rotationally symmetric with the axis line L as an axis except for the attractor pressure equalizing path 52b and the second plunger pressure equalizing path 53c.

A cover 6, positioned on the electromagnetically-driving part 5 side with respect to the pressure equalizing chamber 13, is disposed below the plunger case 51. The cover 6 is interposed and fixed between a lower end of the plunger case 51 and the upper main body 1B. An insertion hole 6a coaxial with the axis line L is formed at the center of the cover 6. Incidentally, any configuration may be adopted as a fixing method as long as the cover 6 is not moved with respect to the valve housing 1 (main body). In this manner, the cover 6 is fixed to the valve member 3 relatively in the direction of the axis line L, and thus, the valve member is not affected by a dynamic pressure of the fluid.

The connection rod 323 of the valve member 3 is inserted into the insertion hole 6a of the cover 6 and the first plunger pressure equalizing path 53b of the plunger 53, and a tubular retaining member 7 made of a non-magnetic body is fitted to an end of the connection rod 323 inside the insertion hole 52a of the attractor 52. The retaining member 7 is fixedly attached to the end of the connection rod 323 by welding. The retaining member 7 includes a flange part 71 at an end thereof on the plunger 53 side, and the flange part 71 is positioned between an opposing surface 53d and an opposing surface 52d of the attractor 52 on the plunger 53 side in the state of being in contact with the opposing surface 53d of the plunger 53 on the attractor 52 side.

A plunger spring 531 is disposed between the plunger 53 and the cover 6. The plunger spring 531 is disposed in the state of being compressed with one end thereof abutting on an inner bottom surface 53e of the plunger 53 and the other end thereof abutting on a spring holding part 61 which is an end surface of the cover 6 on the plunger 53 side. Accordingly, the plunger 53 is in a state in which the opposing surface 53d constantly abuts on the retaining member 7 (flange part 71 thereof), and the valve member 3 is displaced in a valve-opening direction together with the plunger 53 when the plunger 53 is attracted toward the attractor 52. The valve member 3 is connected with the plunger 53 by the connection rod 323 which is a portion of the valve member 3. A clearance between the first plunger pressure equalizing path 53b of the plunger 53 and the connection rod 323 of the valve member 3 is set to be larger than a clearance between the plunger 53 and the plunger case 51, and thus, the valve member 3 and the plunger 53 are not in contact with each other even when the plunger 53 is displaced in the direction orthogonal to the axis line L.

A setting adjustment part 8 is disposed inside the adjustment part hole 52c of the attractor 52. The setting adjustment part 8 includes an adjusting screw 81, a spring holder 82, an adjusting spring 83, and a ball 84. The adjusting spring 83 is disposed in a compressed state between the adjusting screw 81 and the spring holder 82, and the ball 84 is disposed inside the insertion hole 52a of the attractor 52 in the state of abutting on the spring holder 82. Further, the adjusting spring 83 biases the ball 84 through the spring holder 82 to abut on an upper end of the retaining member 7. In addition, the adjusting screw 81 is attached to the attractor 52 by screwing a male thread part 811 at an outer circumference thereof into a female thread part 52e formed on an inner circumference surface of an upper portion of the attractor 52.

A small clearance is disposed between the ball 84 and the insertion hole 52a of the attractor 52, and thus, the ball 84 is displaceable inside the insertion hole 52a along the axis line L. In addition, a cylinder part 72 having a cylindrical shape with a small thickness is formed at an end of the retaining member 7 on the ball 84 side, and the cylinder part 72 is in spherical surface contact with the ball 84. Accordingly, the upper end of the retaining member 7 (and the valve member 3) is constantly positioned on the axis line L.

A magnetic circuit is formed by feeding current to the magnet coil 54 of the electromagnetically-driving part 5, and an attractive force is generated between the attractor 52 and the plunger 53 by a magnetic field. The attractive force depends on the current fed to the magnet coil 54.

The electromagnetic control valve of the embodiment operates as follows through the above-described configuration. The adjusting spring 83 of the setting adjustment part 8 biases the valve member 3 toward the valve seat sheet 23 of the valve seat member 2 through the spring holder 82, the ball 84, and the retaining member 7. The plunger 53 is attracted to the attractor 52 by exciting the magnet coil 54, the valve member 3 is displaced in a direction of separating from the valve seat sheet 23 against a biasing force of the adjusting spring 83, and an opening degree of the valve port 22 is controlled according to a positional relation between the valve body 31 and the valve seat sheet 23 in the direction along the axis line L as the valve transits from a closed state to an opened state. Incidentally, the flange part 71 of the retaining member 7 is at a position of abutting on the opposing surface 52d of the attractor 52 when the plunger 53 is positioned at the uppermost end, and the valve opening degree is in a fully opened state. In this manner, the flange part 71 serves as a stopper, and accordingly, the plunger 53 is prevented from being tightly attracted (in close contact with) to the attractor 52.

In addition, when the excitation of the magnet coil 54 is released, the valve body 31 sits on the valve seat sheet 23, and the valve is closed. Incidentally, a biasing force that the adjusting spring 83 applies to the valve member 3 is adjusted according to an insertion amount of the adjusting screw 81, and accordingly, it is possible to control the electromagnetic force required to open the valve. In this manner, the valve member 3 is displaced in the direction along the axis line L according to an equilibrium relation between the electromagnetic force generated by the magnet coil 54 and the spring force of the adjusting spring 83, and the opening degree of the valve port 22 is changed using the valve body 31.

In addition, the pressure difference between the pressure of the valve chamber 12 and the pressure of the second port 21 acts on the valve body 31 as described above so that a force is applied in a valve-closing direction. On the other hand, the pressure equalizing chamber 13 communicates with the valve port 22 and the second port 21 through the first pressure equalizing path 32a, the second pressure equalizing path 32b, and the opening hole 31a (pressure equalizing path), and thus, the pressure difference between the pressure of the second port 21 acting on the pressure equalizing chamber 13 and the pressure of the valve chamber 12 acts on the diaphragm 4 so that a force in the valve-opening direction is applied to the valve member 3. Further, an effective pressure-receiving diameter D1 of the valve body 31 (an inner diameter of the valve seat sheet 23 in the case of the embodiment) and an effective pressure-receiving diameter D2 of the diaphragm 4 are equal, and thus, a force applied to the valve member 3 due to the pressure difference is mutually cancelled (offset) so that the opening and closing of the valve body 31 is not affected by the pressure difference.

In this manner, when the electromagnetic force depending on the current applied to the electromagnetically-driving part 5 is balanced against the spring force of the adjusting spring 83, and the force acting on the valve body 31 due to the pressure difference between the first port 11 and the second port 21 is cancelled (offset) by the force acting on the valve body 31 due to the pressure difference applied to the diaphragm 4 (pressure sensing part) between the valve chamber 12 and the pressure equalizing chamber 13, the influence of the force acting on the valve body 31 due to the pressure difference is removed, and thus, it is possible to proportionally change the opening degree of the valve port 22 with a small amount of fed current.

The electromagnetically-driving part 5, the adjusting spring 83, the pressure equalizing chamber 13, and the diaphragm 4 (pressure sensing part) are disposed on the opposite side of the valve port 22 with respect to the valve body 31 on the axis line L of the valve port 22. In addition, a structure is formed in which only the second port 21 is disposed below the valve port 22. Therefore, it is possible to shorten a length of the valve housing 1 in the direction of the axis line L, and to reduce a size of the electromagnetic control valve. In addition, the second port 21 is configured to communicate coaxially with respect to the valve port 22, that is, is coaxial with the axis line L, and thus, the pressure loss in the second port 21 decreases so that the fluid flows smoothly.

Herein, a relation of A1 > A3 ... (1) and relations of A1 ≤ A2, A3 < A4, A3 < A5, and A3 < A6 ... (2) are satisfied when a sectional area of the first pressure equalizing path 32a (ϕD1) of the valve body 31 is represented by A1, a gross sectional area of the second pressure equalizing path 32b (ϕD2) is represented by A2, a sectional area of the donut-shaped gap between an inner diameter of the insertion hole 6a of the cover 6 and an outer diameter of the connection rod 323 is represented by A3, a sectional area of the donut-shaped gap between the first plunger pressure equalizing path 53b and the outer diameter of the connection rod 323 is represented by A4, a gross sectional area of the second plunger pressure equalizing path 53c is represented by A5, and a gross sectional area of the attractor pressure equalizing path 52b is represented by A6.

In this manner, the gap between the insertion hole 6a of the cover 6 and the connection rod 323 is formed to be the narrowest. Accordingly, the flow of the fluid from the pressure equalizing chamber 13 toward the plunger 53 is regulated. That is, the cover 6 receives the dynamic pressure of the fluid when the fluid flowing from the first port 11 through the valve port 22 flows into the pressure equalizing chamber 13 through the first pressure equalizing path 32a and the second pressure equalizing path 32b of the valve body 31, and the flow of the fluid is throttled by the gap between the insertion hole 6a and the connection rod 323 so that the fluid on the second port 21 side hardly flows to the electromagnetically-driving part 5. Therefore, the dynamic pressure of the fluid does not act on the plunger 53 or the ball 84 only through a rapid rise of the pressure of the pressure equalizing chamber 13 even in a case in which the valve is rapidly opened, and thus, it is possible to perform a stable control even when the pressure of the second port 21 is rapidly changed. Incidentally, "to throttle the flow of the fluid" or "the flow of the fluid is throttled" refers to a state in which a width of the gap is reduced to a degree at which dust, contamination, or the like is not stuck in the gap, or to a degree at which an operation failure does not occur due to an assembly tolerance to decrease the amount of the fluid flowing through the gap.

An electromagnetic control valve 100 of the embodiment may be used in a system having an orifice on the second port 21 side as illustrated in Fig. 3. In this case, the pressure P2 of the second port 21 increases when the amount of the fluid flowing from the first port 11 to the second port 21 increases. Therefore, the pressure of the pressure equalizing chamber 13 is easy to increase, but the dynamic pressure of the fluid does not act on the plunger 53 or the ball 84 even in this case, and thus, it is possible to perform the stable control.

In addition, the gap area (A4) of the first plunger pressure equalizing path 53b, the gross sectional area (A5) of the second plunger pressure equalizing path 53c, and the gross sectional area (A6) of the attractor pressure equalizing path 52b are set to be larger than the gap area (A3) of the insertion hole 6a of the cover 6 in the electromagnetically-driving part 5, and thus, the pressure of the fluid in the electromagnetically-driving part 5 is immediately equalized between the plunger spring chamber 53a of the plunger 53 and the adjustment part hole 52c of the attractor 52, and hardly acts on the plunger 53 and the ball 84, and thus, it is possible to perform the stable control.

Incidentally, the second plunger pressure equalizing path 53c of the plunger 53 is opened aside from the flange part 71 of the retaining member 7, and further, the attractor pressure equalizing path 52b is opened at an outer circumferential end of a bottom portion of the adjustment part hole 52c, and thus, the dynamic pressure of the fluid flowing from the plunger spring chamber 53a to the adjustment part hole 52c hardly acts on the ball 84 and the spring holder 82. Therefore, it is possible to perform the stable control.

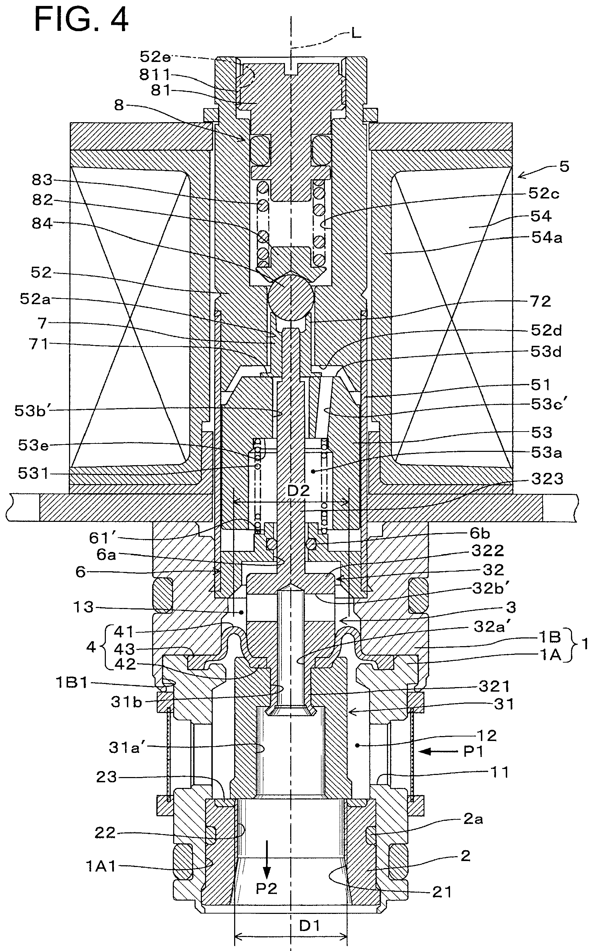

Fig. 4 is a longitudinal sectional view of an electromagnetic control valve of a second embodiment in a closed state, and the same members and the same components as in the first embodiment are represented by the same reference numerals, and the redundant description thereof will be omitted. The second embodiment is different from the first embodiment in terms of structures of the valve body 31, the connecting part 32, the attractor 52, the plunger 53, and the cover 6.

The valve body 31 includes a cylindrical opening hole 31a' at a center thereof in the second embodiment. The first pressure equalizing path 32a', which extends to elongate from the coupling shaft 321 into the boss part 322, and the second pressure equalizing path 32b', which intersects with the first pressure equalizing path 32a' and is opened to the pressure equalizing chamber 13, are formed in the connecting part 32. Further, the first pressure equalizing path 32a', the second pressure equalizing path 32b' , and the opening hole 31a' of the valve body 31 form a "pressure equalizing path", and the valve port 22 communicates with the pressure equalizing chamber 13 through the opening hole 31a', the first pressure equalizing path 32a', and the second pressure equalizing path 32b' similarly to the first embodiment.

In addition, the attractor 52 does not include the attractor pressure equalizing path 52b of the first embodiment, an insertion hole 53b', which has the same shape as the first plunger pressure equalizing path 53b of the first embodiment, is formed in the plunger 53, and the plunger pressure equalizing path 53c' is formed beside the insertion hole 53b' instead of the second plunger pressure equalizing path 53c in the second embodiment.

The cover 6 according to the second embodiment includes an O-ring 6b as a "sealing member" inside the insertion hole 6a. Incidentally, a lower end of the plunger spring 531 abuts on the spring holding part 61' which is an end surface of a boss part fitted with O-ring 6b. Further, the gap between the insertion hole 6a and the connection rod 323 is sealed with the O-ring 6b. Incidentally, a collision amount of the O-ring 6b is set to 0 (zero) at this time, and a sliding resistance between the connection rod 323 and the O-ring 6b is extremely small so as not to influence on the operation of the valve member 3. Accordingly, a clearance between the O-ring 6b and the connection rod 323 is extremely small, and thus, the flow of the fluid from the pressure equalizing chamber 13 toward the plunger 53 is further decreased as compared to the first embodiment. Therefore, the dynamic pressure of the fluid does not act on the plunger 53 and the ball 84, and thus, it is possible to perform the stable control even in a case in which the pressure of the second port 21 is rapidly changed. Although the O-ring is used as the "sealing member" in this embodiment, a ring-shaped packing such as Teflon (registered trademark) may be used as the "sealing member".

Incidentally, the first plunger pressure equalizing path 53b and the second plunger pressure equalizing path 53c are formed in the center of the plunger 53 in the first embodiment, but the center may be simply formed as the insertion hole 53b' , and the plunger pressure equalizing path 53c' may be formed laterally to the center as in the second embodiment.

Although the pressure equalizing chamber 13 and the valve chamber 12 are comparted by the diaphragm 4 in the above-described embodiment, a sealing member may be disposed between the periphery of an upper portion of the valve body 31 and an inner circumferential surface of an upper portion of the valve chamber 12 instead of the diaphragm 4. In this case, the "pressure sensing part" forms each upper surface portion of the valve body 31 and the boss part 322.

In addition, the description has been given in the embodiments regarding a case in which the fluid is caused to flow in through the first port 11, and the fluid flows out through the second port 21, but the same structure of the embodiments may be applied also in a case in which the fluid flows inversely. That is, it is possible to apply the same structure in a case in which the fluid flows in through the second port 21, and the fluid flows out through the first port 11. In this case, it is obvious that the second port 21 corresponds to the first port in the claims, and the first port 11 corresponds to the second port in the claims.

### Reference Signs List

- 1: valve housing
- 1A: lower main body
- 1B: upper main body
- 11: first port
- 12: valve chamber
- 13: pressure equalizing chamber
- 2: valve seat member
- 21: second port
- 22: valve port
- 23: valve seat sheet
- 3: valve member
- 31: valve body
- 31a: opening hole (pressure equalizing path)
- 32: connecting part
- 32a: first pressure equalizing path (pressure equalizing path)
- 32b: second pressure equalizing path (pressure equalizing path)
- 323: connection rod (a portion of the connecting part)
- 4: diaphragm (pressure sensing part)
- 41: convolution part
- 42: inner ring part
- 43: outer ring part
- 5: electromagnetically-driving part
- 51: plunger case
- 52: attractor
- 52a: insertion hole
- 52b: attractor pressure equalizing path
- 52c: adjustment part hole
- 53: plunger
- 53a: plunger spring chamber
- 53b: first plunger pressure equalizing path
- 53c: second plunger pressure equalizing path
- 531: plunger spring
- 54: magnet coil
- 6: cover
- 6a: insertion hole
- 7: retaining member
- 71: flange part
- 72: cylinder part
- 8: setting adjustment part
- 81: adjusting screw
- 82: spring holder
- 83: adjusting spring
- 84: ball
- L: axis line

## Claims

1. An electromagnetic control valve comprising:
a valve chamber and a valve port formed between a first port and a second port; and
an electromagnetically-driving part that drives a valve body in the valve chamber to open and close the valve port,
wherein a force acting on the valve body due to a pressure difference between the first port and the second port is offset by a force acting on the valve body due to a pressure difference applied to a pressure sensing part between the valve chamber and a pressure equalizing chamber,
an electromagnetic force of the electromagnetically-driving part is balanced against a spring force of an adjusting spring so that an opening degree of the valve port is proportionally changed,
the electromagnetically-driving part includes a plunger which is movable inside a case in an axis direction of the case by the electromagnetic force,
a valve member having the valve body is connected to the plunger through a connecting part of the valve member,
the electromagnetically-driving part, the adjusting spring, the pressure equalizing chamber, and the pressure sensing part are disposed on an opposite side of the valve port with respect to the valve body on an axis line of the valve port,
a pressure equalizing path through which the valve port communicates with the pressure equalizing chamber is formed in the valve member having the valve body, and
a cover, which regulates flow of a fluid from the pressure equalizing chamber toward the plunger and to which a portion of the connecting part is insertable, is disposed between the pressure equalizing chamber and the plunger.

2. The electromagnetic control valve according to claim 1, wherein
the cover includes an insertion hole into which a connection rod of the connecting part is inserted, and
the flow of the fluid toward the plunger is regulated by throttling the flow of the fluid using a gap between the insertion hole and the connection rod.

3. The electromagnetic control valve according to claim 1, further comprising:
an insertion hole through which a connection rod of the connecting part is inserted into the cover; and
a sealing member which is fitted into the connection rod inside the insertion hole with a clearance,
wherein the flow of the fluid toward the plunger is regulated by the sealing member.

4. The electromagnetic control valve according to any one of claims 1 to 3, wherein
the pressure sensing part is a flexible diaphragm which is disposed between the valve chamber and the pressure equalizing chamber and is connected to the valve member.
